# EUROPÄISCHE PATENTSCHRIFT

(11) **EP 0 809 917 B1**
(45) Veröffentlichungstag und Bekanntmachung des Hinweises auf die Patenterteilung: **11.08.1999**
(21) Anmeldenummer: 96901689.8
(22) Anmeldetag: 01.02.1996
(51) Int. Cl.: H04Q 7/38

(54) **VERFAHREN ZUR DYNAMISCHEN KANALZUTEILUNG IN MOBILFUNKNETZEN**
PROCESS FOR DYNAMIC CHANNEL ALLOCATION IN MOBILE RADIO NETWORKS
PROCEDE D'ATTRIBUTION DYNAMIQUE DE CANAUX DANS UN RESEAU RADIOTELEPHONIQUE MOBILE

(30) Priorität: 16.02.1995 DE 19505243
(43) Veröffentlichungstag der Anmeldung: 03.12.1997
(73) Patentinhaber: DeTeMobil Deutsche Telekom MobilNet GmbH, 53227 Bonn (DE)
(72) Erfinder: BENKNER, Thorsten, D-57271 Hildchenbach (DE); DAVID, Klaus, D-48159 Münster (DE); SCHÖNBORN, Michael, D-48151 Münster (DE)
(74) Vertreter: Riebling, Peter, Dr.-Ing.
(86) Internationale Anmeldenummer: DE9600143
(87) Internationale Veröffentlichungsnummer: WO9625829

(56) Entgegenhaltungen:
- DE-A- 4 236 982
- 1993 43RD IEEE VEHICULAR TECHNOLOGY CONFERENCE. PERSONAL COMMUNICATION - FREEDOM THROUGH WIRELESS TECHNOLOGY, SECAUCUS, NJ., MAY 18 - 20, 1993, 18.Mai 1993, Seiten 164-167, XP000393149 KOJIRO HAMABE ET AL.: "DISTRIBUTED ADAPTIVE CHANNEL ALLOCATION SCHEME WITH VARIABLE C/I THRESHOLD IN CELLULAR SYSTEMS"
- IEEE JOURNAL ON SELECTED AREAS IN COMMUNICATIONS, Bd. 11, Nr. 6, 1.August 1993, Seiten 949-954, XP000404002 YOSHIHIKO AKAIWA ET AL: "CHANNEL SEGREGATION - A SELF-ORGANIZED DYNAMIC CHANNEL ALLOCATION METHOD: APPLICATION TO TDMA/FDMA MICROCELLULAR SYSTEM" in der Anmeldung erwähnt

## Beschreibung

Die Erfindung betrifft ein Verfahren zur dynamischen Kanalzuteilung in Mobilfunknetzen, wobei für die einzelnen Kanäle Prioritäten festgesetzt werden, die in Abhängigkeit von in dem jeweiligen Kanal auftretenden Interferenzen erhöht oder vermindert werden.

In Mobilfunknetzen erfolgt die Übertragung zwischen Basisstationen und Mobilstationen in Kanälen, die durch mindestens einen Zeitschlitz auf mindestens einem Träger festgelegt sind. Im Falle einer leitungsorientierten Übertragung ist beim Aufbau einer Verbindung und beim Wechsel einer Mobilstation von einer Basisstation zu einer anderen die Zuteilung eines der zur Verfügung stehenden Kanäle erforderlich. Im Falle einer paketorientierten Übertragung erfolgt eine Kanalzuteilung für jeden zusammenhängenden Verbindungsabschnitt.

In den Kanälen können verschiedene die Übertragungsqualität beeinträchtigende Interferenzen auftreten. Dabei sind außer Interferenzen durch gleiche Frequenzen von Nachbarzellen auch Interferenzen durch andere Störer wirksam, wie beispielsweise Zündfunken von Kraftfahrzeugen, atmosphärische Störungen und thermisches Rauschen bei geringer Empfangsfeldstärke. Diese Interferenzen unterliegen zeitlichen Schwankungen, die bei der Kanalzuteilung berücksichtigt werden sollten.

Ein selbstadaptives, lernfähiges Verfahren zur dynamischen Kanalzuteilung ist beschrieben in Furuya, Y., Akaiwa, Y.: "Channel Segregation, A Distributed Adaptive Channel Allocation Scheme for Mobile Communication Systems" in IEICE Transactions, Vol. E 74, No. 6, June 1991, S. 1531 ff. und in Akaiwa, Y., Andoh, H.: "Channel Segregation A Self-Organized Dynamic Channel Allocation Method: Application to TDMA/FDMA Microcellular System" in IEEE Journal on Selected Areas in Communications, Vol. 11, No. 6, August 1993, S. 949 ff. Der dabei verwendete Algorithmus wird "Channel Segregation" (CSEG) genannt. Das bekannte Verfahren kann sowohl bei paketorientierter als auch bei leitungsorientierter Übertragung eingesetzt werden. Dabei unterhält jede Basisstation eine Liste der Prioritäten über alle ihr zur Verfügung stehenden Kanäle. Die Liste der Prioritäten wird nach jedem zusammenhängenden Verbindungsabschnitt im Falle einer ungestörten Übertragung inkrementiert oder bei einer Störung dekrementiert. Bei jeder neuen Kanalvergabe wird immer derjenige freie Kanal mit der momentan höchsten Priorität vergeben.

Mit der Zeit bildet sich dann ein Verwendungsmuster im Netz aus, in welchem die Kanäle mit hoher Priorität immer öfter und die mit niedrigerer Priorität immer seltener vergeben werden. Dieses Verwendungsmuster wird ähnlich statisch wie die sogenannte Fixed Channel Allocation (FCA), bei welcher die vorhandenen Frequenz-Resourcen gleichmäßig über eine sich wiederholende Zellstruktur verteilt werden. Dieses Verfahren gewährleistet damit, daß die Kanäle sich bei einem gleichmäßigen Funkverkehrsaufkommen geringstmöglich stören.

Es ist allerdings bei nicht gleichmäßiger Verkehrsverteilung höchst ineffizient.

Ein verbessertes Verfahren zur dynamischen Kanalzuteilung, basierend auf dem oben beschriebenen Algorithmus der "Channel Segregation" ist beschrieben in Hamabe, K., Ueda,T., Otsu, T.: "Distributed Adaptive Channel Allocation Scheme with Variable C/I Threshold in Cellular Systems" in 43rd IEEE Vehicular Technology Conference, Meadowlands Hilton, Secaucus, NJ, USA, May 18-20, 1993. Hierbei wird zur gleichmäßigeren Kanalzuteilung ein Schwellwert für das Träger/Interferenz-Verhältnis (C/I) festgelegt, der für Kanäle mit niedriger Priorität kleiner angesetzt wird als für Kanäle mit hoher Priorität. Dazu werden die zur Verfügung stehenden Kanäle je nach Priorität in drei Gruppen unterteilt, wobei jeder Gruppe ein Schwellwert zugeordnet wird.
Durch dieses Verfahren ist eine gleichmäßigere Auslastung der Kanäle gewährleistet; es reagiert aber nicht optimal auf Veränderungen, z.B. bei einem Wechsel der Verkehrsverhältnisse.

Aufgabe der vorliegenden Erfindung ist es, ein Verfahren zur Kanalzuteilung in Mobilfunknetzen anzugeben, welches zwar ebenfalls aus der Kanalvergabe in der Vergangenheit lernt, jedoch eine hohe Ausnutzung der vorhandenen Kanäle bei verschiedenen Verkehrssituationen ermöglicht und möglichst flexibel auf Veränderungen reagiert.

Diese Aufgabe wird erfindungsgemäß durch die im kennzeichnenden Teil des Patentanspruchs 1 angegebenen Merkmale gelöst.

Mit diesem erfindungsgemäßen Verfahren findet eine Belegung von Kanälen mit niedrigerer Priorität häufiger als bei dem bekannten Verfahren statt. Dadurch wird die Effizienz des Netzes wesentlich verbessert. Außerdem besteht eher die Möglichkeit, daß die zunächst niedrige Priorität eines Kanals bei Vorliegen entsprechender Voraussetzungen erhöht wird.

Vorzugsweise ist bei diesem Verfahren vorgesehen, daß ein bei der Prüfung, ob ein Kanal belegt werden soll, angewandter Schwellwert, insbesondere des Träger/Interferenz-Verhältnisses, eine Funktion der Priorität des jeweiligen Kanals ist. Hierdurch ist eine vorteilhafte Berücksichtigung der Ausbreitungsbedingungen bei der Kanalzuteilung möglich. Dabei ist vorzugsweise vorgesehen, daß die Funktion ausgehend von einer Konstanten einen mit kleiner werdender Priorität monoton fallenden Verlauf aufweist, der vorzugsweise logarithmisch ist.

Die Bewertung der Ausbreitungsbedingungen bzw. der Interferenzen kann durch verschiedene Messungen erfolgen, beispielsweise des Träger/Interferenz-Verhältnisses, der Empfangsfeldstärke, bei Mobilfunknetzen mit einer Leistungsregelung der dazu erforderlichen Stellgröße und gegebenenfalls auch der Signallaufzeit.

Eine schnelle Adaption der Prioritäten kann bei einem anderen erfindungsgemäßen Verfahren dadurch erfolgen, daß zur Erhöhung und Verminderung der Priorität eine Mittelwertbildung einer vom Ausmaß der Interferenzen abhängigen Größe erfolgt, vorzugsweise durch rekursive Filterung.

Ein weiteres erfindungsgemäßes Verfahren dient dadurch zur Dynamisierung der Kanalzuteilung, daß den Kanälen bei verschiedenen Interferenz- und/oder Lastsituationen verschiedene Prioritäten zugeteilt werden, wobei die Prioritäten aller Kanäle für jeweils eine Interferenz- und/oder Lastsituation in einer Prioritätenliste geführt werden, und daß bei Belegung der Kanäle die anzuwendende Priorität der Prioritätenliste für die jeweils vorliegende Interferenz- und/oder Lastsituation entnommen wird. Entsprechend der vorliegenden Situation wird zur Kanalzuteilung die dieser Situation angepaßte Prioritätliste verwendet. Dadurch reduziert sich die Reaktionszeit auf das Erkennen der jeweiligen Situation bzw. das vorprogrammierte Umschalten von einer Prioritätenliste auf eine andere.

Die Auswahl der Prioritätenliste kann sowohl über ein gesamtes Netz als auch in einzelnen Gebieten innerhalb des Netzes unabhängig voneinander erfolgen. Bei der Zusammenfassung mehrerer Basisstationen zu solchen Gebieten muß berücksichtigt werden, daß sich die Randzellen der einzelnen Gebiete möglichst wenig gegenseitig beeinflussen.

Ausführungsbeispiele der Erfindung sind in der Zeichnung anhand mehrerer Figuren dargestellt und in der nachfolgenden Beschreibung näher erläutert. Es zeigt:
- Fig. 1: ein Flußdiagramm zur Erläuterung des erfindungsgemäßen Verfahrens,
- Fig. 2: ein Diagramm eines rekursiven Filters erster Ordnung und
- Fig. 3: den Verlauf der Eingangs- und Ausgangsgrößen des rekursiven Filters.

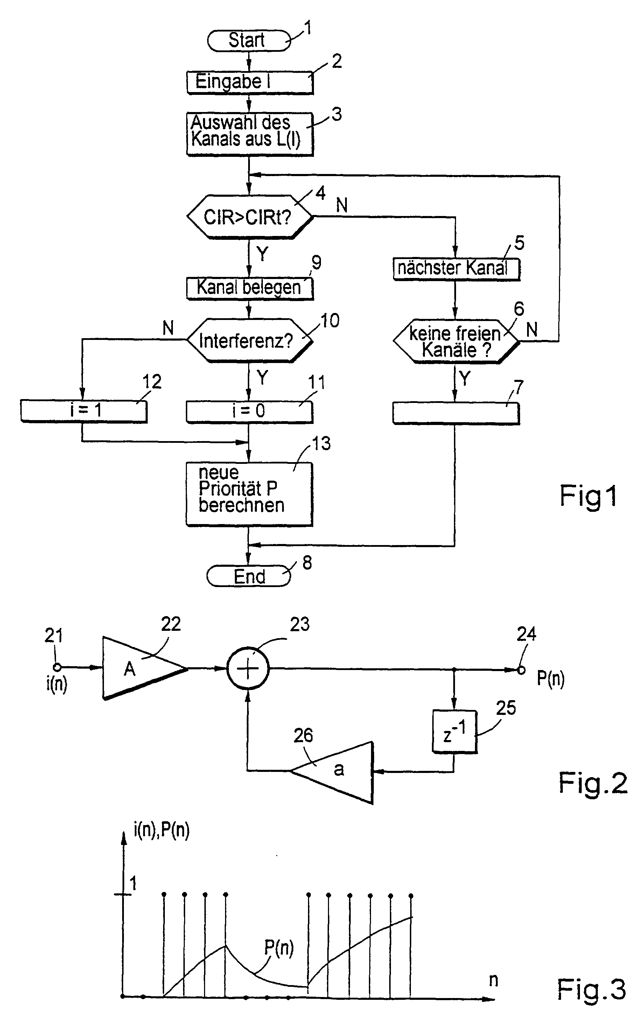

Das in Fig. 1 dargestellte Programm wird bei 1 jedes Mal gestartet, wenn ein Kanal benötigt wird. Dieses ist beispielsweise im Falle von leitungsorientierten Verbindungen bei dem Herstellen der Verbindung oder bei einem Hand-over aus einer anderen Zelle erforderlich. Bei paketorientierter Übertragung erfolgt das Belegen eines freien Kanals bei jedem Verbindungsabschnitt.

Bei 2 wird eine Ganzzahl 1 in das Programm übernommen, welche eine Ordnungsnummer der jeweils zu verwendenden Prioritätenliste darstellt. 1 kann manuell eingegeben werden. Es kann jedoch im Rahmen der Erfindung auch eine selbsttätige Auswahl der Prioritätenliste in Abhängigkeit von der jeweiligen Interferenz- und/oder Lastsituation erfolgen.

Im nachfolgenden Programmteil 3 wird aus der jeweils gewählten Prioritätenliste L(1) derjenige freie Kanal mit der höchsten Priorität P ausgewählt. Bei 4 wird entschieden, ob der bei 3 ausgewählte Kanal benutzt werden kann oder nicht. Die Entscheidung wird in Abhängigkeit davon getroffen, ob das Träger/Interferenz-Verhältnis CIR größer als ein Schwellwert CIRt ist, der sich wiederum zusammensetzt aus einem minimalen Träger/Interferenz-Verhältnis CIRmin und einem Sicherheitsabstand CIRs.

Bei dem dargestellten Ausführungsbeispiel ist der Sicherheitsabstand CIRs eine Funktion der Priorität P des jeweils gewählten Kanals. Das Träger/Interferenz-Verhältnis CIR kann für das erfindungsgemäße Verfahren während einer bereits vor dem Beginn der Verbindung durchgeführten Signalisierung bestimmt werden. Es ist jedoch auch eine Verwendung von Werten möglich, die für den jeweiligen Kanal durch Messungen bei vorangegangenen Verbindungen oder Verbindungsabschnitten ermittelt und danach gespeichert wurden.

Die Abhängigkeit des Sicherheitsabstandes CIRs von der Priorität kann vorzugsweise durch die Funktion CIRs = C-f(P) gegeben sein, wobei P Werte zwischen 0 und 1 einnehmen kann und f(P=1) = 0 ist. Damit werden Kanäle hoher Priorität bereits mit einem relativ niedrigen Sicherheitsabstand CIRs verwendet, während Kanäle mit niedriger Priorität einen wesentlich höheren Sicherheitsabstand überwinden müssen. Die Funktion f(P) kann eine logarithmische Funktion sein, beispielsweise f(P) = log₁₀(P).

Ist das Träger/Interferenz-Verhältnis CIR nicht größer als der Schwellwert, folgt der Verzweigung 4 ein Programmteil 5, mit dem der nächste Kanal aus der Prioritätenliste L(l) ausgewählt wird. Stellt sich dabei jedoch heraus, daß keine Kanäle mehr frei sind, erfolgt nach einer Verzweigung 6 je nachdem, ob der Programmstart aufgrund eines neuen Verbindungswunsches oder eines Hand-overs erfolgte, bei 7 eine Meldung, daß zur Zeit kein Verbindungsaufbau möglich ist. Im Falle von paketorientierten Verbindungen werden die zu übertragenden Daten in an sich bekannter Weise vorübergehend zwischengespeichert. Danach wird das Programm bei 8 beendet.

Ist bei der Verzweigung 4 jedoch ein Kanal mit genügend großem Träger/Interferenz-Verhältnis vorhanden, wird dieser Kanal bei 9 belegt. Am Ende der Verbindung oder am Ende der einzelnen Verbindungsabschnitte wird bei 10 festgestellt, ob für die Qualität der Verbindung oder des Verbindungsabschnitts vorgegebene Anforderungen eingehalten werden. Dieses kann beispielsweise aufgrund des gemessenen Träger/Interferenz-Verhältnisses beurteilt werden. Im Fall einer Nichteinhaltung der Anforderungen wird bei 11 eine binäre Größe i = 0 gesetzt, während bei ungestörter Verbindung bei 12 i = 1 gesetzt wird. Mit dem jeweiligen Wert von i erfolgt bei 13 die Berechnung einer neuen Priorität P, worauf bei 8 das Programm beendet wird.

Die Wahl von 1 kann, wie bereits erwähnt, durch manuelle Eingabe oder durch eine selbsttätige Erfassung der Interferenz- und/oder Lastsituation erfolgen. So kann beispielsweise bei normalen Gesprächsaufkommen während der größten Zeit eines Tages eine Prioritätenliste L(1) benutzt werden, während bei besonderen Ereignissen, wie beispielsweise der Beendigung einer Massenveranstaltung, nach der erhöhter Gesprächsbedarf besteht, eine Prioritätenliste L(2) verwendet wird. Um eine der jeweiligen Situation angepaßte Prioritätenliste zu erhalten, kann während des Vorliegens der entsprechenden Situation der Programmteil 13 auf diese Liste einwirken. Dazu kann der Programmteil 13 mit der Größe 1 entsprechend gesteuert werden. Es ist jedoch auch möglich, bei Vorliegen besonderer Situationen, die sich möglicherweise nicht wiederholen, die durch die Berechnung neuer Prioritäten bei 13 entstehende geänderte Liste nicht zu speichern.

Zur automatischen Erfassung der jeweiligen Interferenz- und/oder Lastsituation können beispielsweise die Häufigkeit der Gesprächsanforderungen oder die Häufigkeit der Verzweigung nach "N" bei 4 verwendet werden.

Fig. 2 zeigt schematisch ein rekursives Filter erster Ordnung. Einem Eingang 21 wird das Eingangssignal i(n) zugeführt, wobei n eine Zählvariable zur Bezeichnung der aufeinanderfolgenden Werte ist. Bei 22 wird i(n) mit einem Faktor A bewertet und über einen Addierer 23 zum Ausgang 24 geleitet, an dem die Priorität P(n) ansteht. Diese wird über einen Zwischenspeicher 25 und eine Bewertung 26 um einen Faktor a zum Addierer 23 zurückgeführt. Damit die Prioritätswerte P(n) im Bereich zwischen 0 und 1 bleiben, wird A = 1-a gesetzt. Die Erklärung weiterer Einzelheiten eines rekursiven Filters erübrigt sich im Zusammenhang mit der vorliegenden Erfindung, da rekursive Filter in der Literatur ausreichend beschrieben sind. Es wird lediglich noch darauf hingewiesen, daß mit größer werdendem a die Grenzfrequenz des Tiefpasses niedriger ist und die Integrationszeit umso größer und entsprechend auch umso größer der Einfluß früherer Interferenz-Daten auf die augenblickliche Priorität P(n) ist. Aus Stabilitätsgründen ist jedoch der Betrag von a kleiner als 1.

Fig. 3 zeigt das Verhalten der Priorität P(n) als Ausgangsgröße des rekursiven Filters bei der Eingangsgröße i(n), die zwischen den Werten 0 und 1 wechselt.

## Patentansprüche

1. Verfahren zur dynamischen Kanalzuteilung in Mobilfunknetzen, wobei für die einzelnen Kanäle Prioritäten festgesetzt werden, die in Abhängigkeit von in dem jeweiligen Kanal auftretenden Interferenzen erhöht oder vermindert werden, und ein bei der Prüfung, ob ein Kanal belegt werden soll, angewandter Schwellwert (CIRt), das Träger/Interferenz-Verhältnis (C/I), berücksichtigt wird, wobei der Schwellwert (CIRt) eine Funktion der Priorität (P) des jeweiligen Kanals ist, **dadurch gekennzeichnet**, daß bei guten Ausbreitungsbedingungen Kanäle mit niedrigerer Priorität belegt werden und die Schwellwert-Prioritäten-Funktion, ausgehend von einer Konstanten, einen mit kleiner werdender Priorität (P) monoton fallenden Verlauf aufweist.

2. Verfahren nach Anspruch 1, dadurch gekennzeichnet, daß der fallende Verlauf logarithmisch ist.

3. Verfahren nach Anspruch 1, dadurch gekennzeichnet, daß zur Erhöhung und Verminderung der Priorität eine Mittelwertbildung einer vom Ausmaß der Interferenzen abhängigen Größe erfolgt.

4. Verfahren nach Anspruch 3, dadurch gekennzeichnet, daß die Mittelwertbildung durch rekursive Filterung erfolgt.

## Claims

1. A method for dynamic channel allocation in mobile radio networks, in which priorities are established for the individual channels, which are increased or reduced as a function of interferences occurring in the respective channel, and a threshold value (CIRt) applied in the check as to whether a channel is to be engaged, the carrier/interference ratio (C/1) is taken into account, in which the threshold value (CIRt) is a function of the priority (P) of the respective channel, characterised in that under good propagation conditions, channels with lower priority are engaged and the threshold priorities function, proceeding from a constant, has a pattern falling in a monotonic manner with decreasing priority (P).

2. The method according to Claim 1, characterised in that the falling pattern is logarithmic.

3. The method according to Claim 1, characterised in that to increase and reduce the priority, a mean value formation ensues from a quantity dependent on the extent of the interferences.

4. The method according to Claim 3, characterised in that the mean value formation ensues by recursive filtering.

## Revendications

1. Procédé pour l'affectation dynamique de canaux dans des réseaux de radiocommunication mobile, selon lequel on fixe pour les canaux individuels des priorités qui sont augmentées ou réduites en fonction d'interférences apparaissant dans le canal concerné, et on tient compte d'une valeur seuil (CIRt), à savoir du rapport support-interférence (C/I), qui est appliquée lorsqu'on vérifie si un canal doit être pris, cette valeur seuil (CIRt) étant fonction de la priorité (P) du canal concerné, caractérisé en ce que dans de bonnes conditions de propagation, les canaux à priorité réduite sont pris et la fonction valeur seuil-priorités, à partir d'une constante, présente une courbe descendante monotone avec une priorité décroissante (P).

2. Procédé selon la revendication 1, caractérisé en ce que la courbe descendante est logarithmique.

3. Procédé selon la revendication 1, caractérisé en ce que pour augmenter et réduire la priorité, on forme une moyenne d'une grandeur qui est fonction du degré des interférences.

4. Procédé selon la revendication 3, caractérisé en ce que ladite moyenne est formée par filtrage récursif.
